# EUROPÄISCHE PATENTSCHRIFT

(11) **EP 0 940 575 B1**
(45) Veröffentlichungstag und Bekanntmachung des Hinweises auf die Patenterteilung: **04.10.2006**
(21) Anmeldenummer: 99103776.3
(22) Anmeldetag: 26.02.1999
(51) Int. Cl.: F02F 1/42, F02M 9/10, F02D 9/18, F02B 31/06

(54) **Einlasskanal für eine Brennkraftmaschine**
Inlet conduit for an internal combustion engine
Conduit d'admission pour un moteur à combustion interne

(30) Priorität: 04.03.1998 DE 19809052
(43) Veröffentlichungstag der Anmeldung: 08.09.1999
(73) Patentinhaber: ADAM OPEL AG, 65423 Rüsselsheim (DE)
(72) Erfinder: Breidenbach, Paul, Dipl.-Ing., 55234 Bechenheim (DE)
(74) Vertreter: Daniel, Ulrich W.P.

(56) Entgegenhaltungen:
- DE-A- 2 643 326
- DE-A- 3 518 684
- DE-B- 1 072 005
- US-A- 4 928 638
- PATENT ABSTRACTS OF JAPAN vol. 002, no. 044 (M-013), 24. März 1978 (1978-03-24) & JP 53 001712 A (NISSAN MOTOR CO LTD), 10. Januar 1978 (1978-01-10)

## Beschreibung

Die Erfindung betrifft einen Einlasskanal für eine insbesondere fremdgezündete Hubkolben-Brennkraftmaschine mit Mitteln zum Verändern der Anströmungsrichtung des im Einlasskanal geführten Gases auf ein am Ende des Einlasskanals angeordnetes Einlassventil zu einem Verbrennungsraum.

Der Zweck eines solches Einlasskanals besteht darin, bei bestimmten Betriebsbereichen der Brennkraftmaschine in gezielter Weise eine drallartige Bewegung der Zylinderladung im Verbrennungsraum zu erzielen und so eine stabile Verbrennung zu sichern, wohingegen bei anderen Betriebszuständen der Brennkraftmaschine eine solche Drallbewegung unerwünscht ist und vermieden werden soll.

Ein derartiger Einlasskanal ist mit DE 93 19 545 U1 beschrieben. Bei diesem Einlasskanal ist der Kanalquerschnitt durch eine Wand in zwei Teilkanäle unterteilt, die sich unmittelbar vor einem den Brennraum der Brennkraftmaschine verschließenden Einlassventil zu einem Einlassbereich vereinigen, wobei die Wand eine Teilungsebene bildet, die zumindest am Einlassbereich quer zur Achse des Zylinders der Brennkraftmaschine verläuft und wobei einer der Teilkanäle mit einer steuerbaren Drosselklappe versehen ist.

Ein solcher Einlasskanal hat den Nachteil, dass die in seinem Teilquerschnitt zusätzlich angeordnete Drosselklappe auch im geöffneten Zustand den ungehinderten Durchtritt des Gases insbesondere bei höheren Drehzahlen der Brennkraftmaschine behindert. Dies führt zu ungewollten Wirbelbildungen im Strömungsverlauf und zu Füllungsgradverlusten. Ebenso sind Strömungsablösungen an der stromabliegenden Kante der die beiden Teilkanäle trennenden Wand unvermeidlich, so dass auch dadurch Füllungsgradverluste verursacht werden.

DE 41 35 271 A1 beschreibt ein Saugrohr einer Brennkraftmaschine, bei dem zur Anpassung des Schwingungsverhaltens an den motorischen Betrieb der Brennkraftmaschine der Durchflussquerschnitt mittels eines elastisch aufblähbaren Dehnkörpers verändert wird, wobei dieser Dehnkörper ringförmig ausgebildet ist und den Durchflussquerschnitt konzentrisch verändert. Eine Beeinflussung der Einströmungsrichtung des Gases in den Zylinder der Brennkraftmaschine ist nach der hier aufgezeigten technischen Lehre nicht möglich.

Die US 4 928 638 verfolgt das Ziel, die Verdampfung des Kraftstoff-Luft-Gemisches zu maximieren und die Strömungsgeschwindigkeit desselben in Abhängigkeit einer Vielzahl von Motorparametern zu erhöhen. Hierzu wird in den Ansaugkanal zur gesteuerten Einengung eine aufblasbare Blase eingebracht.

Aus der JP 53 001712 A ist ein Saugrohr bekannt, in dem eine einseitig aufklappbare Klappe vorgesehen ist, welche unter verschiedenen Winkeln in das Saugrohr gestellt werden kann, so dass auf diese Weise der Durchflussquerschnitt durch das Saugrohr verändert wird.

DE 26 43 326 A1 offenbart einen Einlasskanal nach dem Oberbegriff des Anspruchs 1. Der Dehnkörper ist hier durch einen Schlauch gebildet, der die Wandung des Einlasskanals vollumfänglich auskleidet. Ein Zwischenraum zwischen dem Schlauch und der Wandung kommuniziert mit einem Abschnitt des Einlasskanals unmittelbar vor dem Ventilsitz. Der Dehnungsgrad des Dehnkörpers stellt sich einem Ausführungsbeispiel zufolge durch das Verhältnis der Drücke im Innern des Schlauchs einerseits und am Ventilsitz andererseits selbsttätig ein; alternativ kann er auch mechanisch, hydraulisch oder induktiv steuerbar sein.

Der Erfindung liegt die Aufgabe zugrunde, einen Einlasskanal der gattungsgemäßen Art so zu verbessern, dass der Querschnitt des Einlasskanals bei voller Auslenkung des Dehnkörpers auf einfache Weise exakt reproduzierbar eingestellt werden kann.

Die Erfindung löst diese Aufgabe mit den Merkmalen des Anspruches 1. Vorteilhafte Weiterbildungen der Erfindung sind Gegenstand der Unteransprüche.

Ausführungsbeispiele der Erfindung sind nachstehend anhand von Zeichnungen näher beschrieben. Es zeigen

Fig. 1: einen Teilschnitt durch den Zylinderkopf einer nicht erfindungsgemäßen Brennkraftmaschine entlang der Mittelachse eines Einlasskanals bei geforderter hoher Zylinderfüllung;

Fig. 2: einen Schnitt entlang der Linie A in Fig. 1;

Fig. 3: den Teilschnitt nach Fig. 1 bei aufgeweitetem Dehnkörper;

Fig. 4: einen Schnitt entlang der Linie B in Fig. 3;

Fig. 5: einen Teilschnitt durch den Zylinderkopf einer Brennkraftmaschine entlang der Mittelachse eines erfindungsgemäßen Einlasskanals mit einer Anschlagfläche für den Dehnkörper; und

Fig. 6: einen Schnitt entlang der Linie C in Fig. 5.

Ein Zylinderblock 1 einer Brennkraftmaschine mit Zylindern 2 und Kolben 3 ist nach oben durch einen Zylinderkopf 4 abgeschlossen. Zwischen dem Kolben 3 und dem Zylinderkopf 4 ist ein Brennraum 5 gebildet. Im Zylinderkopf 4 befindet sich für jeden der Zylinder 2 ein Einlasskanal 6, der von einem nicht dargestellten Luftfilter zu einem Einlassventil 7 führt. Das Einlassventil 7 ist über einen Schlepphebel 8 entgegen der Kraft einer Ventilschließfeder 9 durch eine Nockenwelle 10 zu öffnen. An den Einlasskanal 6 schließt sich ein Kraftstoff-Einspritzventil 11 an. Eine Zündkerze 12 erstreckt sich mit ihren Elektroden in den Brennraum 5. An einer Wandung 13 des Einlasskanals 6 befindet sich ein flächiger Tragkörper 14. Dieser trägt ein Elastomerteil 15, das mit seinen Rändern gas- und flüssigkeitsdicht am Tragkörper 14 befestigt ist. Der Tragkörper 14 ist mit einer Öffnung und einem sich daran anschließenden Stutzen 16 versehen, der durch eine Öffnung der Wandung 13 des Einlasskanals 6 ragt. An diesem Stutzen 16 ist eine nicht dargestellte Leitung zu einer regelbaren Druckquelle, z. B. einer Gas- oder Flüssigkeitspumpe, angeschlossen. Der Druck dieser Druck- quelle ist vorzugsweise anhand eines Kennfeldes durch die Motorsteuerung in Abhängigkeit von den Motorparametern steuerbar. Der Tragkörper 14 und das Elastomerteil 15 bilden zusammen einen Dehnkörper, der sich unter Druck in seinem Inneren in den Einlasskanal 6 hinein ausdehnt.

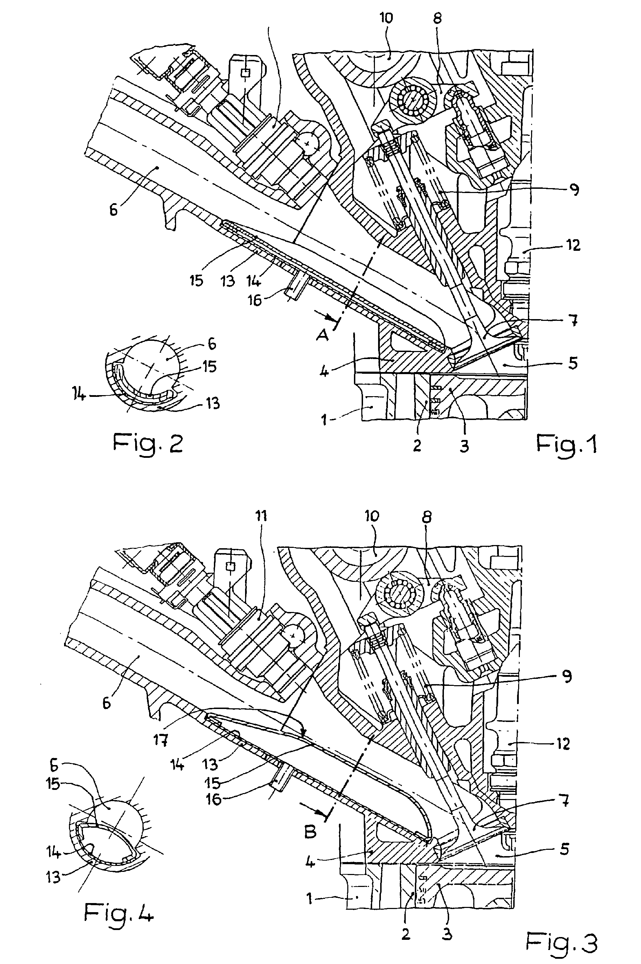

Wenn der Stutzen 16 nicht von Druck beaufschlagt ist, dann liegt das Elastomerteil 15 durch seine Eigenelastizität am Tragkörper 14 flächig an, so dass der Querschnitt des Einlasskanals 6 in seiner im Wesentlichen runden Form nicht beeinträchtigt ist (Fig. 1 und Fig. 2). Mit zunehmendem Druck am Stutzen 16 bläht sich der Dehnkörper auf und bildet im Einlasskanal 6 nahe dem Einlassventil 7 eine einseitige Rampe 17 (Fig. 3), die den Querschnitt des Einlasskanals 6 asymmetrisch verändert und damit den Gasstrom im Einlasskanal 6 so ablenkt, dass sich hinter dem Einlassventil 7 im Verbrennungsraum 5 in gewollter Weise ein Wirbel bildet. Dieser Wirbel kann als senkrecht zur Zylinderachse verlaufende Walze, als parallel zur Zylinderachse verlaufend oder als Zwischenform ausgebildet sein.

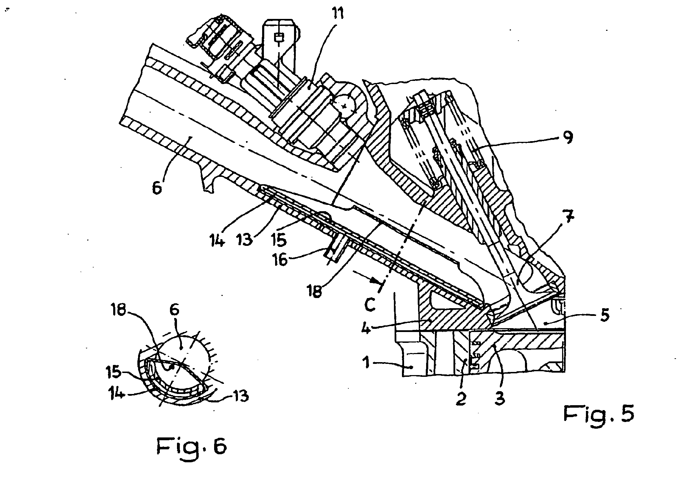

Die Figuren 5 und 6 zeigen eine erfindungsgemäße Abwandlung der oben beschriebenen Brennkraftmaschine. Der Tragkörper 14 ist dabei verbunden mit einem sich in den Querschnitt des Einlasskanals 6 erstreckenden Anschlag 18, an den sich bei voller Auslenkung des Dehnkörpers das Elastomerteil 15 anlegt. Somit ist eine exakt reproduzierbare Höhe der Rampe 17 bei voller Auslenkung des Dehnkörpers möglich.

## Patentansprüche

1. Einlasskanal für eine insbesondere fremdgezündete Hubkolben-Brennkraftmaschine mit Mitteln zum Verändern der Anströmungsrichtung des im Einlasskanal geführten Gases auf ein am Ende des Einlasskanals angeordnetes einen Verbrennungsraum abschließendes Einlassventil, wobei die Mittel aus einem asymmetrisch an einer Wandung (13) des Einlasskanals (6) angeordneten Dehnkörper gebildet sind, welcher durch gesteuertes Aufblähen seines Volumens eine Rampe (17) bildet und **dadurch** den Querschnitt des Einlasskanals (6) bis zu dessen Ende asymmetrisch verändert, und wobei der Dehnkörper ein Elastomerteil (15) umfasst, **dadurch gekennzeichnet, dass** der Dehnkörper ferner einen an der Wandung (13) des Einlasskanals (6) anliegenden Tragkörper (14) umfasst, der mit den Rändern des Elastomerteils (15) gas- und flüssigkeitsdicht verbunden ist, wobei zwischen Tragkörper (14) und Elastomerteil (15) ein Druckmedium durch einen Stutzen (16) gesteuert einbringbar ist, und dass der Tragkörper (14) einen Anschlag (18) bildet, welcher die maximale Ausdehnung des Dehnkörpers begrenzt.

2. Einlasskanal nach Anspruch 1, **dadurch gekennzeichnet, dass** der Dehnkörper an der Wandung (13) des Einlasskanals (6) um die Achse des Einlasskanals (6) verschiebbar ist.

3. Einlasskanal nach Anspruch 1 oder 2, **dadurch gekennzeichnet, dass** das zum gesteuerten Aufblähen des Dehnkörpers verwendete Druckmedium als Flüssigkeit oder Gas von einer Pumpe geliefert ist, deren Druck in Abhängigkeit von den Motorparametern durch eine elektronische Steuerung bestimmt oder nach einem Kennfeld ausgewählt wird.

## Claims

1. An inlet conduit especially for a spark-ignition, reciprocating-piston internal-combustion engine incorporating means for altering the direction in which the gas fed through the inlet conduit flows towards an inlet valve which is arranged at the end of the inlet conduit and seals a combustion chamber, wherein the means are formed by an expandable body which is arranged asymmetrically on a wall (13) of the inlet conduit (6) and forms a ramp (17) by the controlled inflation of its volume and thus alters the cross section of the inlet conduit (6) asymmetrically up to the end thereof, and wherein the expandable body comprises an elastomer part (15), **characterized in that** the expandable body further comprises a carrier body (14) which rests against the wall (13) of the inlet conduit (6) and is connected to the edges of the elastomer part (15) in gas and liquid tight manner, wherein a pressurised medium is adapted to be introduced between the carrier body (14) and the elastomer part (15) through a connecting piece (16) in a controlled manner, and **in that** the carrier body (14) forms a stop means (18) which limits the maximum expansion of the expandable body.

2. An inlet conduit in accordance with Claim 1, **characterized in that** the expandable body on the wall (13) of the inlet conduit (6) is displaceable about the axis of the inlet conduit (6).

3. An inlet conduit in accordance with Claim 1 or 2, **characterized in that** the pressurised media used for the controlled inflation of the expandable body is in the form of a liquid or a gas which is delivered by a pump and the pressure whereof is determined in dependence on the engine parameters by an electronic control system or is selected in accordance with a mapping.

## Revendications

1. Conduit d'admission pour un moteur à combustion interne à pistons alternatifs, en particulier à allumage commandé, avec des moyens pour modifier la direction d'arrivée d'écoulement des gaz guidés dans le conduit d'admission, sur une soupape d'admission fermant une chambre de combustion et disposée à l'extrémité du conduit d'admission, les moyens étant formés d'un corps dilatable, disposé de façon asymétrique sur une paroi (13) du conduit d'admission (6) et qui, par un gonflement commandé de son volume, forme une rampe (17) et, de ce fait, modifie de façon asymétrique la section transversale du conduit d'admission (6) jusqu'à son extrémité, et le corps dilatable comprenant une partie en élastomère (15), **caractérisé en ce que** le corps dilatable comprend en outre un corps support (14), appliqué sur la paroi (13) du conduit d'admission (6) et relié, de façon étanche aux gaz et aux liquides, aux bords de la partie en élastomère (15), un fluide sous pression étant susceptible d'être introduit de façon commandée, au moyen d'une tubulure (16), entre le corps support (14) et la partie en élastomère (15) et **en ce que** le corps support (14) forme une butée (18) qui délimite la dilatation maximale du corps dilatable.

2. Conduit d'admission selon la revendication 1, **caractérisé en ce que** le corps dilatable est déplaçable sur la paroi (13) du conduit d'admission (6), autour de l'axe du conduit d'amenée (6).

3. Conduit d'admission selon la revendication 1 ou 2, **caractérisé en ce que** le fluide sous pression, utilisé pour obtenir le gonflement commandé du corps dilatable, est fourni sous forme liquide ou gazeuse par une pompe, et **en ce que** sa pression est déterminée en fonction des paramètres du moteur, au moyen d'une commande électronique, ou bien est sélectionnée selon un champ de caractéristiques.
